# EUROPEAN PATENT APPLICATION

(11) **EP 4 567 498 A1**
(43) Date of publication of application: **11.06.2025**
(21) Application number: 23867367.7
(22) Date of filing: 13.09.2023
(51) Int. Cl.: G02B 27/09, G08C 23/04, G01V 8/12, H04M 1/02

(54) **ELECTRONIC DEVICE**

(30) Priority: 19.09.2022 CN 202211137686
(71) Applicant: Vivo Mobile Communication Co., Ltd., Dongguan, Guangdong 523863 (CN)
(72) Inventor: CAI, Qinming, Dongguan, Guangdong 523863 (CN); ZHOU, Lei, Dongguan, Guangdong 523863 (CN)
(74) Representative: Murgitroyd & Company
(86) International application number: PCT/CN2023/118592
(87) International publication number: WO 2024/061078

(57) **Abstract**

Disclosed is an electronic device, including a housing, a light-emitting component, a first light-distributing component, and a second light-distributing component, where the housing is provided with an inner cavity and a light exit hole communicating with the inner cavity, the light-emitting component and the first light-distributing component are disposed in the inner cavity, the second light-distributing component is located in the housing, and at least a portion of the second light-distributing component is mounted in the light exit hole; the light-emitting component and the light exit hole are staggered; the first light-distributing component is configured to receive and adjust light emitted by the light-emitting component, causing the light to be transmitted towards a side where the light exit hole is located before being projected onto a second light entrance surface of the second light-distributing component; and the second light-distributing component is configured to receive the light, concentrate the received light at a focal point, and project the light out of the housing from the focal point via the light exit hole.

## Description

### CROSS-REFERENCE TO RELATED APPLICATION

This application claims priority to Chinese Patent Application No. 202211137686.X, filed on September 19, 2022, which is incorporated herein by reference in its entirety.

### TECHNICAL FIELD

This application pertains to the technical field of electronic device design, and specifically relates to an electronic device.

### BACKGROUND

The intelligence of electronic devices brings many conveniences to users. The connection between electronic devices and other products and control on other products are always realized through infrared remote control. Users have high requirements for not only the functions of electronic devices, but also the appearance of electronic devices. Due to the appearance requirements, a light exit hole is usually provided in the central position of a housing of an electronic device. However, because other functional components need to be arranged in the electronic device, there is a large deviation between an optical axis of a light-emitting component and a central axis of the light exit hole. This large deviation reduces the light exit amount of light emitted out of the light exit hole and decreases a light exit angle of the light emitted out of the light exit hole, leading to degradation of the infrared remote control performance of the electronic device.

### SUMMARY

An objective of the embodiments of this application is to disclose an electronic device that can resolve the problem in the background that the large deviation between the optical axis of the light-emitting component and the central axis of the light exit hole in the electronic device results in poor infrared remote control performance of the electronic device.

In order to resolve the foregoing technical problem, this application is implemented as follows:
According to a first aspect, this application discloses an electronic device. The disclosed electronic device includes a housing, a light-emitting component, a first light-distributing component, and a second light-distributing component, where
the housing is provided with an inner cavity and a light exit hole communicating with the inner cavity, the light-emitting component and the first light-distributing component are disposed in the inner cavity, the second light-distributing component is located in the housing, and at least a portion of the second light-distributing component is mounted in the light exit hole;
the light-emitting component and the light exit hole are staggered;
the first light-distributing component is configured to receive and adjust light emitted by the light-emitting component, causing the light to be transmitted towards a side where the light exit hole is located before being projected onto a second light entrance surface of the second light-distributing component; and
the second light-distributing component is configured to receive the light, concentrate the received light at a focal point, and project the light out of the housing from the focal point via the light exit hole.

The technical solutions used in this application can achieve the following beneficial effects:
The electronic device disclosed in the embodiments of this application is improved in structure as compared to the electronic device in the related art by arranging the first light-distributing component and the second light-distributing component between the staggered light-emitting component and light exit hole. Because the first light-distributing component can receive and adjust the light emitted by the light-emitting component, making the light shift towards the side where the light exit hole is located before being projected onto the second light-distributing component, the first light-distributing component can preliminarily correct the light emitted by the light-emitting component. The light projected onto the second light-distributing component can be concentrated at a focal point in the second light-distributing component, which is equivalent to projecting the light from a focal point closer to the light exit hole, allowing the light to achieve optical path crossing in the second light-distributing component. Therefore, the light, which passes through the second light-distributing component and then is projected out of the housing via the light exit hole, has a large light exit amount at a large light exit angle, thereby improving the infrared remote control performance of the electronic device.

### BRIEF DESCRIPTION OF DRAWINGS

FIG. 1 is a schematic diagram of a partial structure of an electronic device according to an embodiment of this application;
FIG. 2 is a schematic diagram of a light path of an electronic device according to an embodiment of this application;
FIGs. 3 to 5 are enlarged schematic diagrams of a partial structure of FIG. 2;
FIG. 6 is an enlarged schematic diagram of a partial structure of FIG. 5;
FIG. 7 is a schematic structural exploded view of an electronic device according to an embodiment of this application; and
FIG. 8 is a schematic diagram of an assembled structure of an electronic device according to an embodiment of this application.

Reference numerals in the accompanying drawings are described as follows:
100. housing; 110. inner cavity; 120. light exit hole; 130. frame; 140. internal support frame; 150. circuit board; 160. assembly gap; 170. battery cover;
200. light-emitting component;
300. first light-distributing component; 310. first light exit surface; 311. first light exit sub-surface; 312. second light exit sub-surface; 320. first light entrance surface; 321. sawtooth inclined surface; 322. sawtooth straight surface;
400. second light-distributing component; 410. second light exit surface; 420. second light entrance surface;
500. display screen;
X1. optical axis; and X2. central axis.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances such that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the contextually associated objects have an "or" relationship.

The electronic device disclosed in the embodiments of this application is hereinafter described in detail by using specific embodiments and application scenarios thereof through the accompanying drawings.

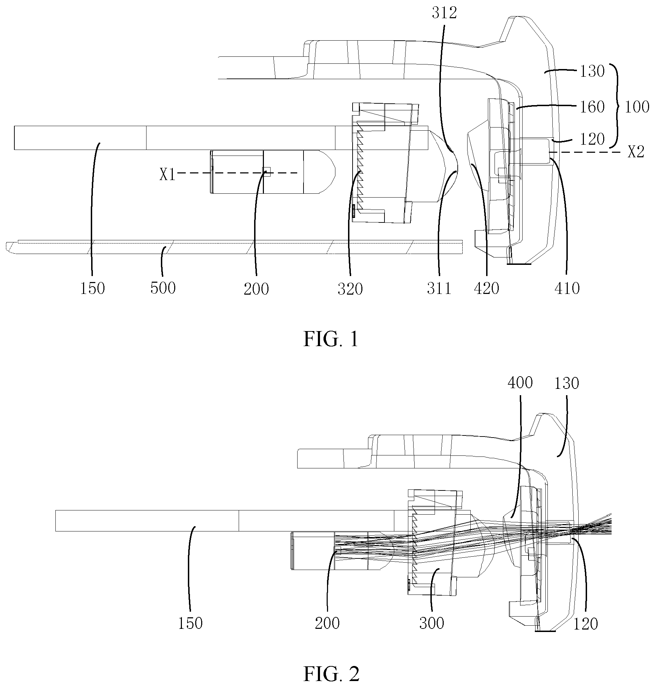

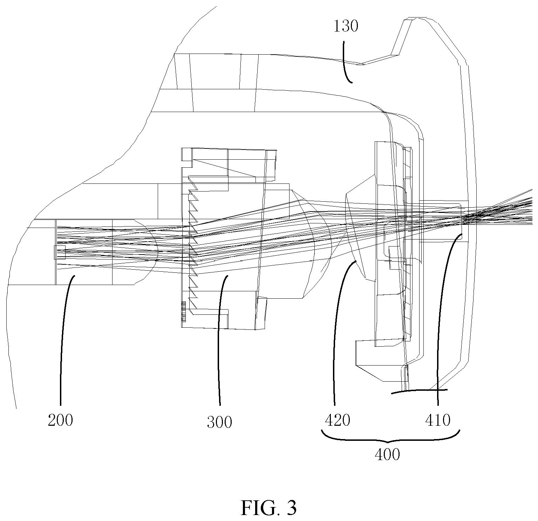

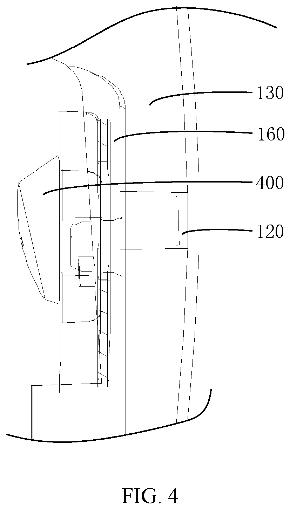

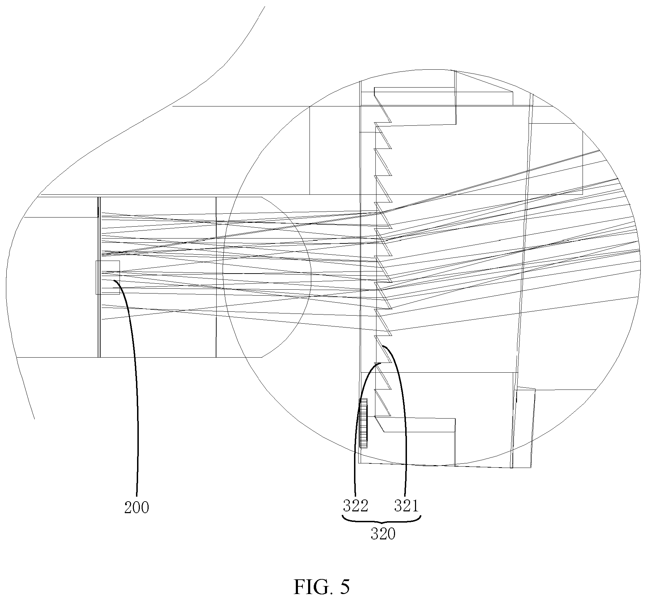

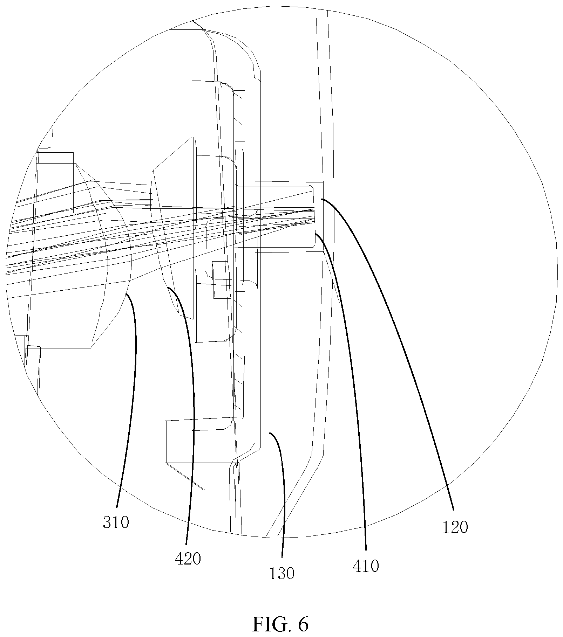

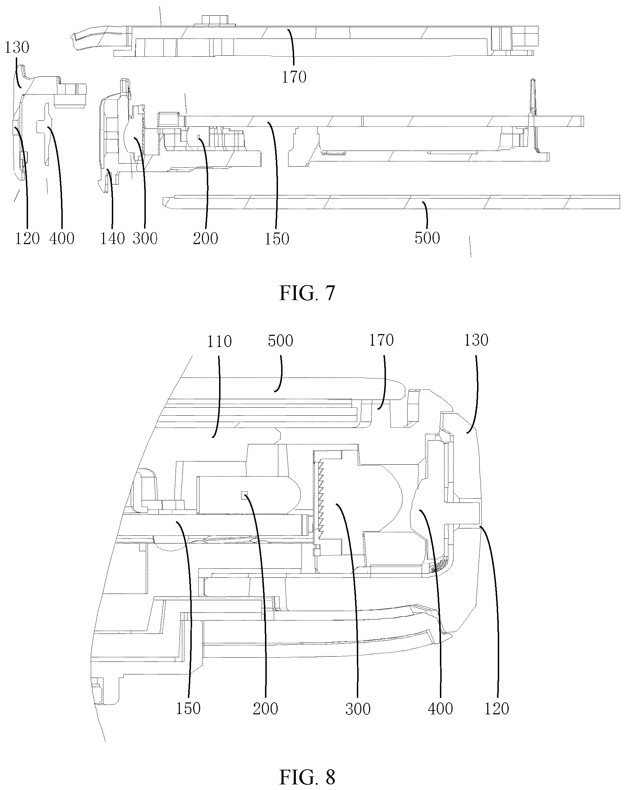

As shown in FIGs. 1 to 8, the embodiments of this application disclose an electronic device. The disclosed electronic device includes a housing 100, a light-emitting component 200, a first light-distributing component 300, and a second light-distributing component 400.

The housing 100 serves as a basic component of the electronic device, providing protection for the internal components of the electronic device. The housing 100 is provided with an inner cavity 110 and a light exit hole 120 communicating with the inner cavity 110, and the light exit hole 120 enables communication between the inner cavity 110 and the external environment. The light-emitting component 200 can emit light. Specifically, the light-emitting component may be an infrared light-emitting diode. The first light-distributing component 300 and the second light-distributing component 400 can both correct the transmission path of the light. The light-emitting component 200 and the first light-distributing component 300 are disposed in the inner cavity 110, the second light-distributing component 400 is located in the housing 100, and at least a portion of the second light-distributing component 400 is mounted in the light exit hole 120.

The light-emitting component 200 and the light exit hole 120 are staggered. In other words, an optical axis of the light-emitting component 200 is at a certain distance to a central axis of the light exit hole 120 in a direction perpendicular to the optical axis, such that the light-emitting component 200 and the light exit hole 120 are eccentrically arranged. And in the direction of the optical axis of the light-emitting component 200, there is also a non-zero distance between the light-emitting component 200 and the light exit hole 120. In this case, it is difficult for a large portion of the light emitted by the light-emitting component 200 to be directly emitted out of the light exit hole 120, resulting in a small light exit amount of the light emitted out of the light exit hole 120 and a small light exit angle of the light emitted out of the light exit hole 120.

To enable most of the light emitted by the light-emitting component 200 to be emitted out of the housing 100 via the light exit hole 120 at a large light exit angle, for achieving an infrared remote control of devices such as televisions, in this application, the first light-distributing component 300 can receive and adjust the light emitted by the light-emitting component 200, causing the light to be transmitted towards a side where the light exit hole 120 is located before being projected onto the second light entrance surface 420 of the second light-distributing component 400. Then, the second light-distributing component 400 can receive the light and concentrate the received light at a focal point. In this way, after distributed by the first light-distributing component 300 and the second light-distributing component 400, the light from the light-emitting component 200 is concentrated at the focal point in the second light-distributing component 400. This allows the light to achieve optical path crossing in the second light-distributing component 400, which is equivalent to moving the position of the light-emitting component 200 into the second light-distributing component 400. The optical path crossing of the light increases the light exit angle and allows for concentrated light, thereby helping to reduce the aperture size of the light exit hole 120.

It should be added that the light can be concentrated at a focal point under the action of the second light-distributing component 400, achieving optical path crossing. This focal point is a virtual focal point. In the field of optics, the light can be concentrated at this focal point by designing the surface shape of the second light entrance surface 420 of the second light-distributing component 400. The light concentrated at this focal point is then emitted out of the light exit hole 120. In this process, the focal point for concentration is located in the second light-distributing component 400, and thus the focal point is closer to the light exit hole 120. In this case, the formation of this focal point is equivalent to moving the light-emitting component 200 a certain distance towards the direction approaching the light exit hole 120, allowing the light-emitting component 400 to project light into the light exit hole 120 from a position closer to the light exit hole 120. This can alleviate the obstruction of the light exit hole 120 to the light projection from the light-emitting component 400, thereby helping to increase the actual light exit angle of the light projected out of the light exit hole 120.

Compared with the distance between the light-emitting component 200 and the light exit hole 120, the distance between the second light-distributing component 400 and the light exit hole 120 is shorter. Therefore, in circumstances where the light concentrated at the focal point is projected out of the housing 100 via the light exit hole 120, the light can have a large light exit amount and a large light exit angle. In other words, the first light-distributing component 300 and the second light-distributing component 400 provided in this application can resolve the problem of poor infrared remote control performance of the electronic device in the case of a large eccentric distance between the light-emitting component 200 and the light exit hole 120.

The first light-distributing component 300 can correct the light to a certain extent, while the second light-distributing component 400 can concentrate the light projected from the first light-distributing component 300 at a focal point closer to the light exit hole 120, thereby alleviating the restriction of the light exit angle by the light exit hole 120. Certainly, it can also allow more light emitted by the light-emitting component 200 to be corrected before being projected out of the light exit hole 120.

The electronic device disclosed in the embodiments of this application is improved in structure as compared to the electronic device in the related art by arranging the first light-distributing component 300 and the second light-distributing component 400 between the staggered light-emitting component 200 and light exit hole 120. Because the first light-distributing component 300 can receive and adjust the light emitted by the light-emitting component 200, making the light shift towards the side where the light exit hole 120 is located before being projected the light onto the second light-distributing component 400, the first light-distributing component 300 can preliminarily correct the light emitted by the light-emitting component 200. The light projected onto the second light-distributing component 400 can be concentrated at a focal point in the second light-distributing component 400, allowing the light to achieve optical path crossing in the second light-distributing component 400. Therefore, the light, which passes through the second light-distributing component 400 and then is projected out of the housing 100 via the light exit hole 120, has a large light exit amount at a large light exit angle, thereby improving the infrared remote control performance of the electronic device.

Specifically, the first light-distributing component 300 may be a bent light guide column. The light guide column adjusts the direction of the light through its bent structure, thereby achieving the correction effect, that is, compensating for the deviation between the light-emitting component 200 and the light exit hole 120. Certainly, to simplify the structure, the first light-distributing component 300 may have a first light exit surface 310, where the first light exit surface 310 is a first convex surface protruding towards the second light-distributing component 400. The formation of the first convex surface makes the overall first light-distributing component 300 resemble a convex lens overall, thereby adjusting the light path through refraction. Certainly, the first convex surface can assist in converging the light to a certain extent, so that the light projected to the second light-distributing component 400 is already pre-converged to a certain degree. Subsequently, under the action of the second light-distributing component 400, it is more conducive to projecting the light to the second light-distributing component 400 before being converged at a focal point.

The second light-distributing component 400 has a second light entrance surface 420, and the second light entrance surface 420 may be a second convex surface protruding towards the first light-distributing component 300. In this case, the second light-distributing component 400 with the second convex surface also resembles a convex lens, which is thus more conducive to projecting the light therein before being converged at a focal point. Certainly, there are various optical structures to converge the light at a focal point, and the specific structure of the second light-distributing component 400 is not limited in this application.

In the electronic device disclosed in the embodiments of this application, the first light-distributing component 300 may have a first light exit surface 310, where the first light exit surface 310 may include a first light exit sub-surface 311 and a second light exit sub-surface 312. The second light exit sub-surface 312 surrounds the first light exit sub-surface 311, and a curvature of the second light exit sub-surface 312 is greater than a curvature of the first light exit sub-surface 311.

This being the case, the second light exit sub-surface 312 with a larger curvature has a stronger deflection ability for light, meaning the deflection angle of the second light exit sub-surface 312 for light is larger. In contrast, the first light exit sub-surface 311 with a smaller curvature has a weaker deflection ability for light, meaning the deflection angle of the first light exit sub-surface 311 for light is smaller. Thus, the first light exit sub-surface 311 and the second light exit sub-surface 312 have different deflection abilities for the light on the first light exit surface 310. Because the second light exit sub-surface 312 surrounds the first light exit sub-surface 311, the deflection directions of the second light exit sub-surface 312 and the first light exit sub-surface 311 for light may be different. Thus, the second light exit sub-surface 312 is conducive to deflecting the light towards the direction approaching the first light exit sub-surface 311, and thus conducive to converging the light passing through the first light-distributing component 300, so as to prevent the first light-distributing component 300 from excessively expanding the light emitted by the light-emitting component 200.

Optionally, the width of the effective light emitted by the light-emitting component 200 may be a first width, and the width of the effective light emitted by the first light exit surface 310 may be a second width. A ratio of the second width to the first width may be less than 1.35, thereby avoiding a reduced light utilization rate caused by a large width of the light emitted by the light-emitting component 200 as expanded by the first light-distributing component 300. It should be noted that in this specification, the width refers to the maximum dimension of the corresponding object in the plane perpendicular to the direction of an optical axis X1.

In the electronic device disclosed in the embodiments of this application, a gap may be present between the first light-distributing component 300 and the second light-distributing component 400, thereby avoiding direct contact between the first light-distributing component 300 and the second light-distributing component 400. This can prevent collision between the first light-distributing component 300 and the second light-distributing component 400 in a case of shaking or bumping the electronic device; otherwise, the collision could cause positional shifts between the first light-distributing component 300 and the second light-distributing component 400, impacting the light distribution effect of the light-emitting component 200, or even cause damage to the first light-distributing component 300 and the second light-distributing component 400, thus impacting the infrared remote control performance of the electronic device.

In the electronic device disclosed in the embodiments of this application, the first light-distributing component 300 may have a first light entrance surface 320. For example, the first light entrance surface 320 may be a sawtooth surface. In this case, the sawtooth surface is conducive to adjusting the path of the light, thereby conveniently guiding the light passing through the first light-distributing component 300 towards the light exit hole 120. The size of the sawtooth angle of the sawtooth surface can be specifically set based on adjustment needs of the light deflection angle, and the size of the sawtooth angle of the sawtooth surface is not specifically limited in this application.

In an optional technical solution, the sawtooth surface may include a sawtooth inclined surface 321, and the included angle between the sawtooth inclined surface 321 and the optical axis X1 of the light-emitting component 200 may be 60±2°, that is, 58° to 62°. In this case, specifically, the included angle between the sawtooth inclined surface 321 and the optical axis X1 of the light-emitting component 200 may be 60°, to achieve a certain angle of deflection of the light emitted by the light-emitting component 200. It should be noted that the included angle between the sawtooth inclined surface 321 and the optical axis X1 of the light-emitting component 200 may also be 58°, 61°, or the like. The angle between the sawtooth inclined surface 321 and the optical axis X1 of the light-emitting component 200 is not specifically limited in this application. Moreover, the optical axis X1 of the light-emitting component 200 is parallel to a central axis X2 of the light exit hole 120. Certainly, the sawtooth surface may also include a sawtooth straight surface 322, the sawtooth straight surface 322 intersects with a sawtooth inclined surface 321 at the edge close to the light exit hole 120, and the sawtooth straight surface 322 is parallel to the optical axis X1, such that an included angle between the sawtooth inclined surface 321 and the sawtooth straight surface 322 may be 60±2°.

To allow the second light entrance surface 420 to conveniently receive the light emitted from the first light exit surface 310, in a further technical solution, the electronic device may also include a display screen 500. The second light entrance surface 420 may be a hemispherical surface, and a cut plane at the center of the second light entrance surface 420 is parallel to the sawtooth inclined surface 321. An included angle between the sawtooth inclined surface 321 and the central axis X2 of the light exit hole 120 is an acute angle. A distance between an edge on a side of the second light entrance surface 420 farther from the display screen 500 and the light exit hole 120 is smaller than a distance between an edge on another side of the second light entrance surface 420 closer to the display screen 500 and the light exit hole 120. This being the case, the light incident on the sawtooth inclined surface 321 is deflected towards the central axis X2. In addition, because the distance between the edge on a side of the second light entrance surface 420 farther from the display screen 500 and the light exit hole 120 is smaller than the distance between the edge on another side of the second light entrance surface 420 closer to the display screen 500 and the light exit hole 120, part of the second light entrance surface 420 closer to the display screen 500 has a larger receiving area for the light emitted from the first light exit surface 310, thereby facilitating the reception of the deflected light emitted from the sawtooth inclined surface 321.

Considering that when using the infrared remote control function of the electronic device, the user habitually raises the end of the electronic device with the light exit hole 120 at an angle, and the product to be remotely controlled (for example, a television) is usually below the light exit hole 120, so it is necessary to emit the light in the light exit hole 120 towards the remotely controlled product located below. To ensure that the light emitted out of the light exit hole 120 can be directed downwards, in the electronic device disclosed in the embodiments of this application, the second light-distributing component 400 may have a second light exit surface 410. The second light exit surface 410 is a first plane, and the plane where a light exit port of the light exit hole 120 is located is a second plane. A first included angle is formed between the first plane and the second plane, and the first included angle is in a range of 1° to 3°. This being the case, the second plane is the plane where the outer surface of the housing 100 is located, and the included angle between the first plane and the second plane indicates that the first plane is inclined relative to the second plane. The inclined first plane is conducive to deflecting the light, and therefore it is easy to emit the light emitted out of the light exit hole 120 onto the product controlled remotely.

Specifically, the angle between the first plane and the second plane may be 2°. Certainly, the angle between the first plane and the second plane may further be 1°, 3°, or the like. The angle between the first plane and the second plane is not specifically limited in this application. In addition, because the first plane is only inclined at a small angle, the user hardly observes the inclined arrangement of the first plane relative to the second plane, which is conducive to user experience. Compared with a first plane arranged as a textured surface to deflect light, a relatively smooth first plane is conducive to meeting the refined appearance demand of the electronic device.

In a further technical solution, the second light exit surface 410 may be concaved in the light exit hole 120. This being the case, relative to the light exit hole 120, the first plane formed by the second light exit surface 410 is a retracted structure. This can prevent the inclined first plane from protruding out of the light exit hole 120, thereby facilitating the protection for the first plane.

In the electronic device disclosed in the embodiments of this application, the second light entrance surface 420 may include a full reflection structure surface, and the full reflection structure surface is used for receiving light and concentrating the received light at a focal point. This being the case, the full reflection structure surface can fully reflect the light projected into the second light entrance surface 420, which is conducive to improving the utilization rate of the light emitted from the light-emitting component 200.

In the electronic device disclosed in the embodiments of this application, the housing 100 may include a frame 130, an internal support frame 140, and a circuit board 150. The internal support frame 140 is disposed in the frame 130, the circuit board 150 is fixed to the internal support frame 140, the light-emitting component 200 is mounted on the circuit board 150, the first light-distributing component 300 is mounted on the internal support frame 140, the second light-distributing component 400 is mounted on the frame 130, and the light exit hole 120 is formed on the frame 130. This being the case, the frame 130 can serve as a mounting base for the electronic device, allowing the internal support frame 140 to be disposed on the frame 130. In addition, the internal support frame 140 can also serve as a mounting base for other components, allowing the first light-distributing component 300 to be mounted on the internal support frame 140. The circuit board 150 can achieve circuit connection and control within the electronic device and provide power to the light-emitting component 200.

The electronic device may also include components such as a battery cover 170 and a display screen 500. The battery cover 170 is mounted on the frame 130, and the display screen 500 is mounted on the internal support frame 140. The plane where the display screen 500 is located is perpendicular to the thickness direction of the electronic device for mounting.

During the assembly of the electronic device, an assembly gap 160 is formed between the second light-distributing component 400 and the frame 130. To ensure good connection stability between the second light-distributing component 400 and the frame 130, the assembly gap 160 can be filled with an adhesive glue such as a photosensitive glue, thereby reducing the gap and improving the connection stability between the second light-distributing component 400 and the frame 130.

The electronic device disclosed in the embodiments of this application may be a mobile phone, a handheld computer, a game console, an e-reader, or the like. The specific type of the electronic device is not limited in this application.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An electronic device, comprising a housing, a light-emitting component, a first light-distributing component, and a second light-distributing component, wherein
the housing is provided with an inner cavity and a light exit hole communicating with the inner cavity, the light-emitting component and the first light-distributing component are disposed in the inner cavity, the second light-distributing component is located in the housing, and at least a portion of the second light-distributing component is mounted in the light exit hole;
the light-emitting component and the light exit hole are staggered;
the first light-distributing component is configured to receive and adjust light emitted by the light-emitting component, causing the light to be transmitted towards a side where the light exit hole is located before being projected onto a second light entrance surface of the second light-distributing component; and
the second light-distributing component is configured to receive the light, concentrate the received light at a focal point, and project the light out of the housing from the focal point via the light exit hole.

2. The electronic device according to claim 1, wherein the first light-distributing component has a first light exit surface, and the first light exit surface is a first convex surface protruding towards the second light-distributing component; the second light-distributing component has a second light entrance surface, and the second light entrance surface is a second convex surface protruding towards the first light-distributing component.

3. The electronic device according to claim 2, wherein the first light exit surface comprises a first light exit sub-surface and a second light exit sub-surface, the second light exit sub-surface surrounds the first light exit sub-surface, and a curvature of the second light exit sub-surface is greater than a curvature of the first light exit sub-surface.

4. The electronic device according to claim 1, wherein a gap is present between the first light-distributing component and the second light-distributing component.

5. The electronic device according to claim 1, wherein the first light-distributing component has a first light entrance surface, and the first light entrance surface is a sawtooth surface.

6. The electronic device according to claim 5, wherein the sawtooth surface comprises a sawtooth inclined surface, and an included angle between the sawtooth inclined surface and an optical axis of the light-emitting component is 58° to 62°, and the optical axis of the light-emitting component is parallel to a central axis of the light exit hole.

7. The electronic device according to claim 6, wherein the electronic device further comprises a display screen, the second light entrance surface is a hemispherical surface, a cut plane at a center of the second light entrance surface is parallel to the sawtooth inclined surface, the sawtooth inclined surface and the central axis of the light exit hole form an acute angle, and compared with a distance between an edge on another side of the second light entrance surface closer to the display screen and the light exit hole, a distance between an edge on a side of the second light entrance surface farther from the display screen and the light exit hole is smaller.

8. The electronic device according to claim 1, wherein the second light-distributing component has a second light exit surface, the second light exit surface is a first plane, a plane where a light exit port of the light exit hole is located is a second plane, a first included angle is formed between the first plane and the second plane, and the first included angle is in a range of 1° to 3°.

9. The electronic device according to claim 8, wherein the second light exit surface is concaved in the light exit hole.

10. The electronic device according to claim 8, wherein the second light entrance surface comprises a full reflection structure surface, and the full reflection structure surface is used for receiving the light and concentrating the received light at the focal point.

11. The electronic device according to claim 1, wherein the housing comprises a frame, an internal support frame, and a circuit board, the internal support frame is disposed in the frame, the circuit board is fixed to the internal support frame, the light-emitting component is mounted on the circuit board, the first light-distributing component is mounted on the internal support frame, the second light-distributing component is mounted on the frame, and the light exit hole is formed on the frame.
